# EUROPEAN PATENT APPLICATION

(11) **EP 4 786 339 A1**
(43) Date of publication of application: **05.08.2026**
(21) Application number: 26152196.7
(22) Date of filing: 15.01.2026
(51) Int. Cl.: B64D 37/14, B64D 37/30, B64F 1/28, F16L 9/18, F16L 11/20, F16L 59/065, F16L 59/14

(54) **AIRCRAFT REFUELLING/DEFUELLING SYSTEM**

(30) Priority: 29.01.2025 GB 202501276
(71) Applicant: Airbus Operations Limited, Bristol BS34 7PA (GB)
(72) Inventor: ASLAM, Mohammad, Bristol, BS34 7PA (GB); OSBORNE, George, Bristol, BS34 7PA (GB); ZAJACZKOWSKI, Nathalie, Bristol, BS34 7PA (GB)
(74) Representative: Abel & Imray LLP

(57) **Abstract**

A refuelling connector has an inner pipe section (e.g. defining inner region 138) for conveying cryogenic hydrogen to an aircraft and an outer pipe section (e.g. defining outer region 136) for holding a vacuum to provide thermal insulation to the inner section. Via one or more suitable valves (126, 132) the connector can, when connected to the aircraft, create a vacuum on the aircraft-side or otherwise convey fluid from / to the aircraft, via the outer pipe section (136).

## Description

### BACKGROUND OF THE INVENTION

The present disclosure relates to an apparatus and method for refuelling an aircraft (and/or defuelling an aircraft). More particularly, but not exclusively, this disclosure concerns a method of refuelling or defuelling an aircraft with cryogenic hydrogen and a refuelling connector for use in such a method.

Hydrogen has been identified as a potentially environmentally preferable alternative to traditional fossil fuels, such as kerosene, in use as a fuel source for aircraft. Some aviation technologies and operations may require relatively minor adjustments to utilise hydrogen, whereas some will require significant alterations. The fuel supply and storage system is one of the latter, due to the considerably different requirements and characteristics of hydrogen in comparison to traditional jet fuels.

Traditional kerosene refuelling technology is not suitable for hydrogen refuelling for a variety of reasons. At atmospheric pressure, hydrogen must be stored at temperatures of 20K or less to be stored as a liquid. A kerosene fuel line does not have sufficient insulation to carry liquid hydrogen at this temperature, and the materials used in such a kerosene fuel line might not be able to withstand such low temperatures.

Additionally, hydrogen is a highly flammable substance, with an ignition energy (that being the energy required to cause a substance to ignite) significantly lower than kerosene. Hydrogen has a large range of concentrations in atmospheric air for which ignition can occur. Hydrogen leaks occurring during refuelling may be difficult to eliminate entirely. Current safety measures in place for preventing ignition of kerosene during a refuelling process are likely to be inadequate for preventing ignition of hydrogen.

The moment of connection of the fuel supply to the aircraft fuel port has been identified as a period of particularly high ignition risk. This is because the fuel line is not connected to the aircraft, so hydrogen vapours which may be present from a previous operation could leak out, and a potential static charge between the aircraft and refuelling equipment could be sufficient to cause ignition.

Additionally, the industry standard process for aircraft refuelling is an under-wing connection by the fuel supply. Therefore, any hydrogen vapours which leak out may not immediately disperse, but could collect in significant concentrations under the wing. Ignition of hydrogen during a refuelling process could therefore cause both injury to people handling the equipment, and damage to the aircraft and surrounding equipment.

The safe handling of hydrogen gas and hydrogen liquid at the interface between the aircraft and any refuelling pipeline is therefore of great importance. Procedures may be required which add cost, complexity or time to aircraft refuelling procedures in order to provide adequate safety measures.

In the case of hydrogen powered aircraft it is likely that hydrogen will need to be defuelled from the aircraft, that is retrieving hydrogen from the aircraft, for example for storage in fuel storage facilities off the aircraft if the aircraft is not operating and not likely to be needed for operation for several hours at least.

Large volumes of cryogenic hydrogen will need to be conveyed to / from the aircraft at extremely low temperatures. The time taken to refuel may be critical to the practicalities of using hydrogen as an aviation fuel. There are therefore special factors that apply to the use of hydrogen as a fuel for commercial aircraft and for large commercial aircraft in particular, some of which conflict with each other. Essential safety measures may add more time constraints on what is already perceived to be a time-critical process.

The solutions provided in other industries are of little assistance. Hydrogen fuelling solutions of the automotive sector are too small scale to be of application in relation to commercial passenger aircraft or freight aircraft. The space industry proposes hydrogen fuelling solutions for larger amounts of hydrogen, but such solutions are typically expensive and not readily scalable or practical for airport usage.

The present invention seeks to mitigate one or more of the above-mentioned problems. Alternatively or additionally, the present invention seeks to provide an improved apparatus for and method of refuelling an aircraft.

### SUMMARY OF THE INVENTION

According to a first aspect of the invention there is provided a method of refuelling or defuelling an aircraft with hydrogen, preferably cryogenic hydrogen. The method includes a step of connecting a pipe to the aircraft via a refuel port of the aircraft. The pipe may be an airport refuel hose for refuelling aircraft. The pipe comprises an inner channel and an outer channel, the outer channel surrounding the inner channel. The method includes a step of using the outer channel to remove gas from the aircraft, for example transferring a vacuum to the aircraft and/or by flushing such gas from the aircraft with gas (e.g. hydrogen gas) transported via the outer channel. Thus, in accordance with embodiments of the invention, the outer channel may be used to provide vacuum insulation to the inner channel when conveying cryogenic hydrogen, and may (e.g. at another stage in the process) be used - for a different purpose - as a conduit for removing gas from the aircraft. This may simplify the number of pipes / channels required for hydrogen refuelling and reduce fuel times. The proposal, in accordance with embodiments of the invention, of utilising the outer space (that would otherwise only be used as a sealed and static vacuum for insulating an inner pipe) for providing fluid flow to / from the aircraft via that outer space opens up the possibilities of speedier, safer and/or more efficient refuelling of commercial aircraft with cryogenic hydrogen.

The method may include conveying gaseous hydrogen to, or from, the aircraft via the outer channel. The method includes a step of conveying hydrogen (e.g. liquid hydrogen) to, or from, the aircraft via the inner channel whilst providing thermal insulation for the inner channel by means of a vacuum in the outer channel. The step of conveying hydrogen to or from the aircraft via the inner channel whilst providing thermal insulation for the inner channel by means of a vacuum in the outer channel, may occur after the step of using the outer channel to remove gas from the aircraft. There may, for example, be a step of establishing a vacuum in the outer channel after using the outer channel to remove gas from the aircraft. The method may include both conveying gaseous hydrogen to, or from, aircraft via the inner channel (e.g. whilst providing thermal insulation for the inner channel by means of a vacuum in the outer channel) and at a different time conveying liquid hydrogen to, or from, the aircraft via the inner channel (e.g. whilst providing thermal insulation for the inner channel by means of a vacuum in the outer channel). Conveyance of hydrogen to the aircraft may comprise hydrogen being transported from a position off of the aircraft to a position on it (and vice versa for conveyance of hydrogen from the aircraft). For example, this may comprise transportation of hydrogen from a piece of ground support equipment or a ground-side fuel store, to a fuel tank of the aircraft (and vice versa for conveyance of hydrogen from the aircraft). The step of using the outer channel to remove gas from the aircraft may be performed to remove contaminants, for example in a region between an aircraft hydrogen tank and the refuel port and/or in a space defined within the refuel port itself. The step of using the outer channel to remove gas from the aircraft may be performed to provide a safety barrier, in the form of a vacuum, in a region between an aircraft hydrogen tank and the refuel port and/or in a space defined within the refuel port itself. Thus, in accordance with embodiments of the invention, there may be no need to use nitrogen gas as an inerting gas. Not using nitrogen can also simplify cool-down processes that may need to be performed before conveying cryogenic hydrogen as a result of the different boiling temperatures of both hydrogen and nitrogen.

Control of flow of fluids via the inner channel and the outer channel may be controlled by valves, for example provided as a part of the pipe connected to the aircraft. For example, it may be that the inner channel has a first valve arrangement and the outer channel has a second valve arrangement.

When conveying liquid hydrogen via a first supply line in accordance with the present invention, so that liquid hydrogen flows in a supply direction it is preferred to provide a return line for the flow of hydrogen (e.g. primarily, if not entirely, gaseous hydrogen) in a return direction. The method may comprise connecting a further pipe to the aircraft, for example via a further port of, or via the same refuel port of, the aircraft - for example to provide such a return line. It may be that liquid hydrogen is conveyed to, or from, the aircraft via one of (a) the pipe comprising the inner channel and the outer channel and (b) such a further pipe, with the other of (a) the pipe comprising the inner channel and the outer channel and (b) the further pipe being used as the return line (e.g. for returning gaseous hydrogen). Providing such a return line can be of particular benefit when refuelling a commercial aircraft with liquid hydrogen because it deals with the issue of hydrogen gas production in a safe and swift manner - hydrogen gas almost inevitably being produced at high volume, as the cryogenic hydrogen evaporates into gas. Given the amount of hydrogen that needs to be conveyed when refuelling a commercial aircraft, the time constraints associated with such refuelling and related safety considerations, an adequate pathway for extraction of hydrogen gas from the aircraft may be provided by such a return line.

The method may comprise opening a valve (e.g. a bypass valve) to create a bypass pathway between (a) the pipe comprising the inner channel and the outer channel and (b) the further pipe. Such a step may be performed as part of a chill down process for example. Such a step may be performed as part of a process comprising flushing out lines with gaseous hydrogen. There may be a bypass pathway defined between a supply line (e.g. a fill line) and a return line (e.g. a gaseous return line). The supply line may have its own independent valve (for example located on/in the aircraft proximate and/or adjacent to the refuel port) for closing / opening a pathway between the refuel port and an aircraft hydrogen tank. The return line may have its own independent valve (for example located on/in the aircraft proximate and/or adjacent to the refuel port) for closing / opening a pathway between the refuel port and an aircraft hydrogen tank. The further pipe (e.g. the return line pipe) may have an inner channel and an outer channel, the outer channel surrounding the inner channel. The method may include using the outer channel of the further pipe to remove gas from the aircraft (including transferring a vacuum to the aircraft). The method may include conveying hydrogen to, or from, the aircraft via the inner channel of the further pipe whilst providing thermal insulation for the inner channel by means of a vacuum in the outer channel of the further pipe.

As mentioned above, the inner channel of the pipe may have a first valve arrangement and the outer channel may have a second valve arrangement. It may be that during at least part of (and possibly during all of) the step of using the outer channel to remove gas from the aircraft, the first valve arrangement is closed and the second valve arrangement is open. It may be that during at least part of (and possibly during all of) the step of conveying hydrogen to, or from, the aircraft via the inner channel, the first valve arrangement is open and the second valve arrangement is closed. It may be the case that the first valve arrangement and the second valve arrangement are together so configured that only one of the first valve arrangement and the second valve arrangement can be open at a time. It may be that the first valve arrangement and the second valve arrangement are operable mechanically. It may be that the first valve arrangement and the second valve arrangement are operable in dependence on the movement of the pipe relative to the refuel port for example. Thus, in accordance with embodiments of the invention, it may be possible to automate the movement of the valves in the refuelling process / defuelling process as a result of the movement of such movement. Alternatively or additionally one or both of the first valve arrangement and the second valve arrangement may be operated by electrically and / or hydraulically operated actuators.

The pipe connected to the aircraft may have, at a free end, a first coupling and the refuel port of the aircraft may have a second coupling such that the step of connecting the pipe to the aircraft includes connecting the first coupling to the second coupling. One or both of the aforementioned first and second valve arrangements may for example be partly provided as part of the first coupling and partly provided as part of the second coupling. It may be that the closing and opening of at least one of the first valve arrangement and the second valve arrangement is dictated by the position of the first coupling relative to the second coupling. For example, progressive relative movement in the same direction between the first coupling and the second coupling may cause one of the first valve arrangement and the second valve arrangement to move from a closed state to an open state. Relative movement (e.g. further progressive relative movement in the same direction) between the first coupling and the second coupling may cause one of the first valve arrangement and the second valve arrangement to move from an open state to a closed state (and optionally at the same relative position between the first coupling and the second coupling, or with yet further progressive relative movement in the same direction, cause the other of the first valve arrangement and the second valve arrangement to move from a closed state to an open state).

The steps of the method do not necessarily need to be carried out in the same order as that presented above or as set forth in the attached claims and the performing of one step may overlap with another.

The pipe connected to the aircraft via the refuel port may be considered as a double walled vacuum insulated pipe, when conveying hydrogen via the inner channel and being insulated by the vacuum in the outer channel. The refuel port may be connected to the tank(s) of the aircraft via one or more pipes not being a double-walled vacuum insulated pipe. Instead, the aircraft-side pipe may be a single walled pipe.

According to a second aspect of the invention there is also provided an aircraft refuelling connector, for example being configured for use in the step of the method of the invention as described or claimed herein, of connecting (e.g. a refuelling line) to the refuel port of the aircraft. For example, the aircraft refuelling connector may comprise one or both of the first coupling (e.g. at the free end of the refuel line) and the second coupling (e.g. being part of the refuel port of the aircraft).

The refuelling connector comprises an inner pipe section for conveying liquid hydrogen and an outer pipe section for holding a vacuum in a space between the inner pipe section and the outer pipe section (e.g. in a space between the outer surface of the inner pipe section and an inner surface of an outer wall of the outer pipe section). The aircraft refuelling connector is arranged to have a first configuration (e.g. whilst connected to the aircraft) for creating a vacuum within a region, separate from and in fluid communication with, the space between the inner pipe section and the outer pipe section (e.g. within a region on or in the aircraft). The aircraft refuelling connector is arranged to have a second configuration (e.g. whilst connected to an aircraft) for conveying liquid hydrogen (e.g. to or from the aircraft) via the connector (e.g. via the inner pipe section). In the second configuration, the space between the inner pipe section and the outer pipe section may hold a vacuum (which may be a partial vacuum) which provides thermal insulation between the liquid hydrogen in the inner pipe section and the surroundings to the exterior of the outer pipe section of the connector. The refuelling connector comprises one or more valves that are operable to enable the connector to selectively adopt one of the first and second configurations. For example, the inner pipe section may have a first valve arrangement and the outer pipe section may have a second valve arrangement arranged such that (a) in the first configuration the first valve arrangement is closed and the second valve arrangement is open, and (b) in the second configuration the first valve arrangement is open and the second valve arrangement is closed. It may be the case that the first valve arrangement and the second valve arrangement are together so configured that only one of the first valve arrangement and the second valve arrangement can be open at a time.

The outer pipe section may comprise a vacuum valve for attachment of a vacuum pump. The outer pipe section may comprise a seal member that is configured to form a seal when the connector is used to connect a refuel line to a refuel port. The refuelling connector, or a part thereof, may be configured for movement that causes the connector to transition between the first configuration and the second configuration. The refuelling connector may have an axis and such movement may comprise one or both of axial movement parallel to the axis and rotational movement about the axis. A handle may be provided that when rotated about the axis causes such axial movement parallel to the axis.

One or both of the first valve arrangement and the second valve arrangement may be configured such that with continued movement in the same direction of at least a part of the connector (e.g. also causing the connector to transition between the first configuration and the second configuration) at least one of the first valve arrangement and the second valve arrangement moves from a closed position to an open position and back to a closed position. There may be two distinct closed positions, for example a first closed position in which a first passageway is closed by a valve member and a second closed position in which a second passageway is closed by the same valve member (or alternatively, a first closed position in which a passageway is closed by a first valve member and a second closed position in which the same passageway is closed by a second valve member).

There may be a control surface (e.g. part of a cam arrangement) formed at least in part by structure of the connector, which is configured to hold the connector in one of the first configuration and the second configuration. There may be a stop formed at least in part by structure of the connector, the stop being configured to prevent such movement beyond an end position, the end position corresponding to the connector being in one of the first configuration and the second configuration.

One or both of the first valve arrangement and the second valve arrangement may comprise a movable (e.g. spring-loaded) valve member (e.g. valve head). One or both of the first valve arrangement and the second valve arrangement may comprise a valve pusher that is arranged to move with (e.g. being fixed in position relative to) one or both of the inner pipe section and the outer pipe section, the valve pusher moving the valve member relative to a passageway that is open or closed by the valve member depending on their relative positions.

One or both of the first valve arrangement and the second valve arrangement may comprise a fixed valve member (e.g. valve head) which is arranged to move with (e.g. being fixed in position relative to) one or both of the inner pipe section and the outer pipe section, the valve member moving relative to a passageway that is open or closed by the valve member depending on their relative positions. The structure defining the passageway may be moveable relative to one or both of the inner pipe section and the outer pipe section, and may for example be spring-loaded.

The inner pipe section and the outer pipe section may be secured together so that relative movement of the inner pipe section and the outer pipe section is prevented.

The connector may be integrally formed as part of the end of a refuel line. For example the inner pipe section of the connector may be a continuation of the inner pipe section of the refuel line, and the outer pipe section of the connector may be a continuation of the outer pipe section of the refuel line.

There is also provided a refuelling or defuelling system for conveying liquid hydrogen to, or from, an aircraft, the system comprising a pipe comprising an inner channel and an outer channel, the outer channel surrounding the inner channel, the pipe being configured for connecting to the aircraft via a refuel port of the aircraft in accordance with the method of the present invention. The refuelling or defuelling system may comprise a connector according to the invention as described or claimed herein. The refuelling or defuelling system may comprise a vacuum pump configured for drawing gas from the outer channel. The refuelling or defuelling system may comprise a storage tank for holding liquid hydrogen. The refuelling or defuelling system may be wholly separate from the aircraft (optionally with the exception of a refuel port on the aircraft).

The invention also provides a coupling for use in the method or apparatus of the invention as described or claimed herein, the coupling being one of the first coupling and the second coupling.

There is also provided an aircraft comprising a refuel port configured for use in the method or apparatus of the invention as described or claimed herein. The aircraft may comprise one or more refuel ports that define part of a refuelling / defuelling system on the aircraft. The aircraft may comprise one or more liquid hydrogen storage tanks. The aircraft may comprise pipes leading to and/or from the refuel port (providing fluid communication between the aircraft storage tank(s) and the refuel port. The pipes may include a first pipe (e.g. a feed line) for conveying fluid in a first direction between the aircraft storage tank(s) and the refuel port, and a second pipe (e.g. a return line) for conveying fluid in a second opposite direction between the aircraft storage tank(s) and the refuel port. There may be a bypass line between the first and second pipes and an associated bypass valve to open and close fluid flow via the bypass line between the first and second pipes. The first and second pipes may each be provided with a valve arranged to open and close flow along the pipe. The valves of the first, second and/or bypass pipes may be located next to / at the refuel port. The valves may be so arranged that a space is defined which can hold a vacuum to provide a hydrogen-free barrier between the exterior of the aircraft and a region containing liquid or gaseous hydrogen fuel on the aircraft.

One of the embodiments of the invention is an example of a double walled pipe having an inner conduit surrounded by an outer conduit, wherein the inner conduit is configured for conveying cryogenic hydrogen to an aircraft as part of an aircraft refuelling process, and the outer conduit is both (a) configured to hold a vacuum, while the inner conduit is conveying cryogenic hydrogen, so that the inner conduit is vacuum insulated, and (b) configured to transfer a vacuum to the aircraft as part of the aircraft refuelling process. The inner conduit may be defined by an inner wall of the double walled pipe. The outer conduit may be defined by the space between the inner wall and an outer wall of the double walled pipe. The double walled pipe may have two walls only. The innermost wall of the double walled pipe may bound the inner conduit. The second-innermost wall of the double walled pipe may bound the outer conduit, and may, for example, also be the outermost wall of the double-walled pipe. The double walled pipe may have an inner conduit surrounded by an outer conduit, with the inner conduit being the innermost conduit, there being no other conduits between the outer conduit and the inner conduit and with the outer conduit being the outermost conduit.

The aircraft may be a passenger aircraft. The passenger aircraft preferably comprises a passenger cabin comprising a plurality of rows and columns of seat units for accommodating a multiplicity of passengers. The aircraft may have a capacity of at least 20, more preferably at least 50 passengers, and optionally more than 75 passengers. The aircraft may be a commercial aircraft, for example a commercial passenger aircraft, for example a single aisle or twin aisle aircraft. The aircraft need not be configured for carrying passengers, but could for example be an aircraft of an equivalent size configured for cargo and/or used on a non-commercial basis. The aircraft may have a maximum take-off weight (MTOW) of at least 20 tonnes, optionally at least 40 tonnes, and possibly 50 tonnes or more. The aircraft may have an operating empty weight of at least 20 tonnes, optionally at least 30 tonnes, and possibly about 40 tonnes or more.

It will of course be appreciated that features described in relation to one aspect of the present invention may be incorporated into other aspects of the present invention. For example, the method of the invention may incorporate any of the features described with reference to the apparatus of the invention and *vice versa.*

### DESCRIPTION OF THE DRAWINGS

Embodiments of the present invention will now be described by way of example only with reference to the accompanying schematic drawings of which:
- Figure 1: shows a front view of an aircraft being refuelled by ground support equipment according to a first embodiment of the invention;
- Figure 2: is a sectional view of a first refuel coupling according to the first embodiment;
- Figure 3: is an end-on view of the refuel coupling of Figure 2;
- Figure 4: is a sectional view of a second refuel coupling according to the first embodiment;
- Figure 5: is an end-on view of the refuel coupling of Figure 4;
- Figure 6: shows the refuel couplings of Figures 2 and 4 connected together at an initial position;
- Figure 7: is an enlarged view of part of Figure 6;
- Figure 8: shows the refuel couplings of Figures 2 and 4 connected together, and having moved to an intermediate position;
- Figure 9: shows the refuel couplings of Figures 2 and 4 connected together, and having moved to an end position; and
- Figures 10 to 15: show the various states of equipment and valves during a refuelling process using two connection assemblies, each being formed by couplings as shown in Figures 6 to 9.

### DETAILED DESCRIPTION

Embodiments of the present invention relate to the conveyance of liquid hydrogen to and/or from an aircraft that is at least partially fuelled with liquid hydrogen (i.e. a fully or partially hydrogen-powered aircraft). The handling of liquid hydrogen (i.e. cryogenic hydrogen) in large quantities - as would be required for a commercial aircraft fuelled by hydrogen - involves technical challenges over and above those that are faced when handling jet fuel. The flammability of hydrogen, its very low boiling temperature at atmospheric pressure, and the high pressures required to contain liquid hydrogen, are all factors that contribute to such technical challenges. In view of such factors, the refuelling / defuelling process is typically a multi-step process. For example, before conveying liquid hydrogen, there may be a need to chill-down pipework on and off the aircraft, and to ensure that any regions in which hydrogen is to be conveyed is purged of air or sources of oxygen and not contaminated with other gases ("inerting"). There may also be a need to deal with the production of hydrogen gas that is likely to evaporate from any liquid hydrogen being conveyed.

Nitrogen is used as an inerting gas on aircraft fuel systems of the prior art (using jet-fuel), and would be suitably inert for use with hydrogen fuel systems. However, using nitrogen in relation to liquid hydrogen is not without its own challenges. Nitrogen has a boiling point of 77K and a freezing point of 63K. This presents challenges if it comes into contact with liquid hydrogen which would typically be transferred at lower temperatures - e.g. at around 20K. Helium might be a better candidate for use as an inert gas as its boiling point is around 4K, but it is not a practical choice when considering the scale of a commercial aircraft as a result of the scarcity of Helium and consequential cost. There is also the issue that refuelling of an aircraft needs to be done as quickly as possible to minimise time between flights.

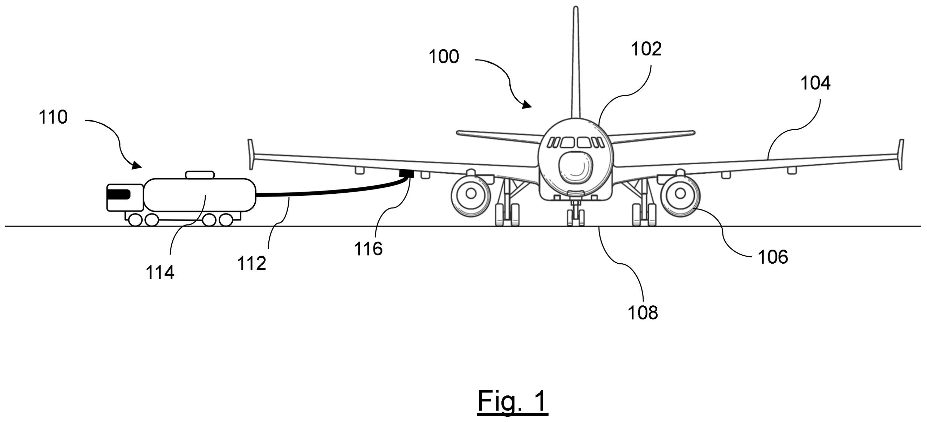

Figure 1 shows a hydrogen-powered aircraft 100 comprising a fuselage 102, wings 104, and engines 106, located on the ground 108, being refuelled by ground support equipment 110 via a (ground side) fuel line 112. The ground support equipment carries a source 114 of liquid hydrogen fuel (stored cryogenically). At a free end of the fuel line 112, there is a refuel (male) coupling 116 which is configured to connect to the aircraft by means of inserting into and coupling with a (female) refuel coupling 118 (not shown separately in Figure 1) of an aircraft fuel port located on the underside of the aircraft wing 104. The fuel is supplied to a tank system in the aircraft (i.e. aircraft side), the tanks of which may be housed in the wings 104 and/or in the fuselage 102 for example.

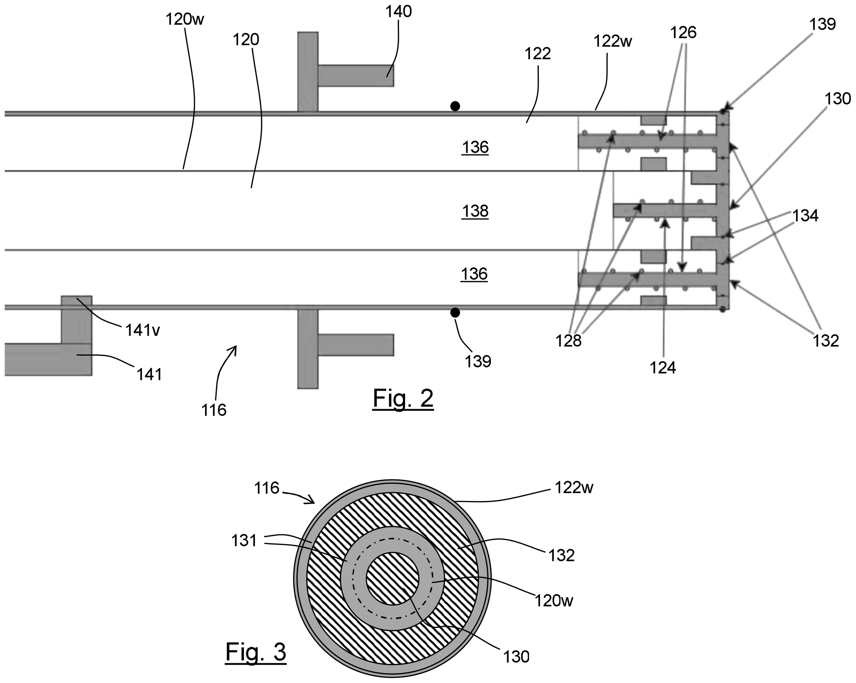

Figures 2 and 3 show the refuel coupling 116 of Figure 1 in further detail. Figure 2 shows a cross section of the refuel coupling 116. Figure 3 shows a partial end-on view (as viewed from the right side of Figure 2) of the coupling 116. The coupling 116 has an inner pipe section 120 (defined by a cylindrical wall 120w, shown with a dashed line in Figure 3) contained within an outer pipe section 122 (defined by a cylindrical wall 122w). The inner pipe section 120 conveys liquid hydrogen. The coupling comprises an inner spring-loaded valve 124 associated with the inner pipe section 120 and an outer spring-loaded valve 126 associated with the outer pipe section 122. The valves 124 and 126 are resiliently biased with the use of springs 128. The inner spring-loaded valve 124 presents an inner circular valve face 130 at the free end of the coupling. The outer spring-loaded valve 126 presents an outer annular valve face 132 at the free end of the coupling. Seals 134 are provided to enable the pipe section to maintain a vacuum in an outer region 136 between the outer pipe section 122 and the inner pipe section 120 and to maintain liquid hydrogen under pressure in an inner region 138 defined by the inner pipe section 120. Outer seals 139 are also provided to provide a seal between the male coupling 116 and the corresponding female coupling 118 (not shown in Figure 2) when the male coupling 116 is inserted into the female coupling 118. The male coupling 116 has a locating ring 140 (not shown in Figure 3) that is fixed on the outside of the outer pipe section 122 for use when the male coupling 116 is inserted into the female coupling 118. The structure of the coupling around the spring-loaded valves 124, 126 (such structure including the cylindrical walls 120w, 122w and the parts 131 shaded in solid colour in Figure 3) is a fixed structure that is reinforced and held together by radially extending ribs (not shown). A pipe 141 (not shown in Figure 3) connected to a vacuum pump may be connected, via a vacuum valve connection 141v, to draw gas from, and create a vacuum (including a partial vacuum) in the outer region 136 between the outer pipe section 122 and the inner pipe section 120.

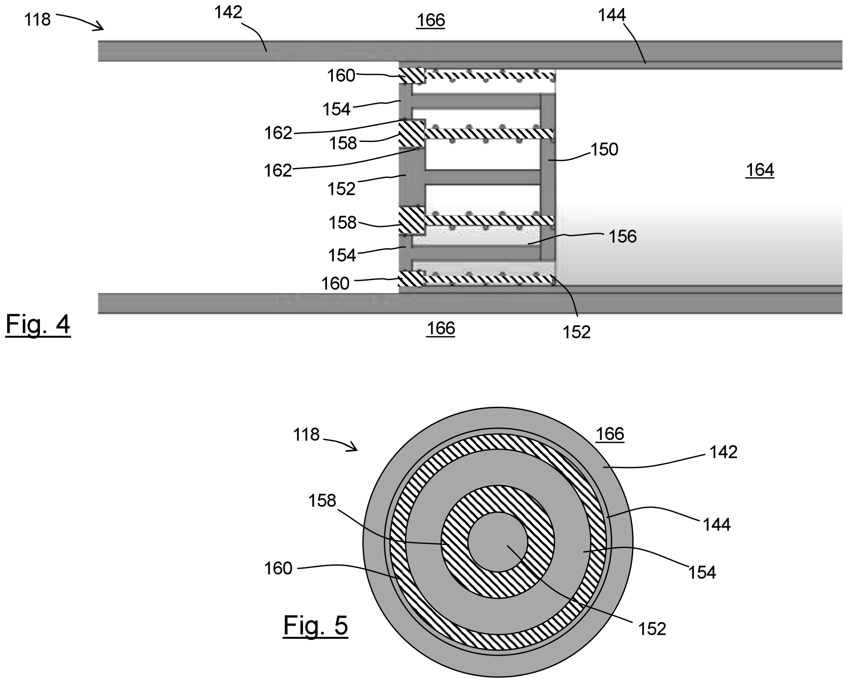

Figures 4 and 5 show the female refuel coupling 118 of the fuel port on the aircraft wing 104 (not shown in Figures 4 or 5), which is configured to receive the male coupling 116 (also not shown). It will be understood that the fuel port may be located elsewhere on the aircraft, for example on the fuselage 102. Figure 4 shows a cross section of the refuel coupling 118 and Figure 5 shows an end-on view (as viewed from the left side of Figure 4). The female refuel coupling 118 has an outer wall 142 within which there is fixedly mounted an inner sleeve 144 having an inner diameter that is sized to accommodate in sliding contact the outer wall 122w and associated seals 139 of the male coupling 116. The refuel coupling 118 includes an internally mounted inner valve pusher structure 150 to which is fixedly attached an inner valve pusher 152 and an outer annular valve pusher 154, which are arranged as a fixed and unitary structure relative to the outer wall 142 of the coupling. Between the inner valve pusher 152 and the outer annular valve pusher 154, there is located an inner sprung ring 158. Between the outer annular valve pusher 154 and the inner sleeve 144 there is located an outer sprung ring 160. Various seals 162 are provided so that the interior space 164 defined within the coupling 118 is sealed off from the exterior 166.

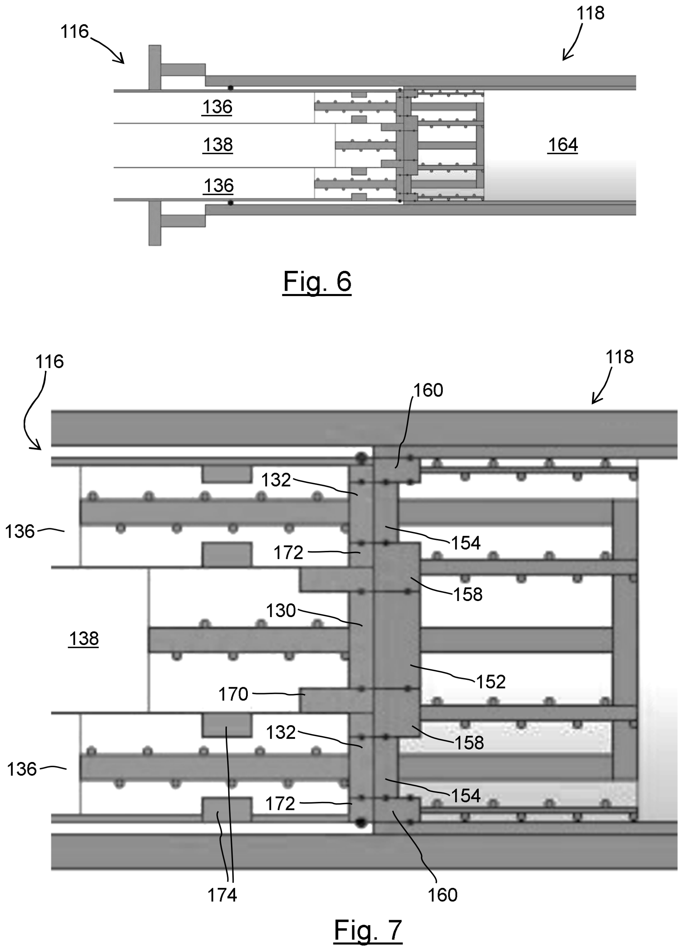

Figure 6 shows the male refuel coupling 116 immediately after being brought into contact with the female coupling 118, a part of the male refuel coupling 116 having been partially inserted into the female coupling 118 - this showing an initial position of movement / contact. Figure 7 shows an enlarged view of a portion of Figure 6, showing a region of contact between the couplings 116, 118. The inner valve pusher 152 of the female coupling 118 is shown as abutting, but not having yet moved, the inner circular valve face 130 of the male coupling 116. In this position, the inner circular valve face 130 forms a seal with a surrounding seat 170, and the inner valve pusher 152 forms a seal with the passage defined by the inner sprung ring 158. Similarly, the outer valve pusher 154 of the female coupling 118 is shown as abutting, but not having yet moved, the outer annular valve face 132 of the male coupling 116. In this position, the outer annular valve face 132 forms a seal with a surrounding annular seat 172 and the outer valve pusher 154 forms a seal with the annular passage defined between the inner sprung ring 158 and the outer sprung ring 160. A further annular valve seat 174, having a cross-section similar to that of the annular seat 172, forms an open passageway in the position shown in Figures 6 and 7. In this position, the outer space 136 of the male coupling 116, the interior space 138 of the male coupling 116, and the interior space 164 of the female coupling are each sealed off from each other. (It will be appreciated that the fixed parts 131 - identified by the solid shading in Figure 3 - include the annular seat 170 and the annular seat 172).

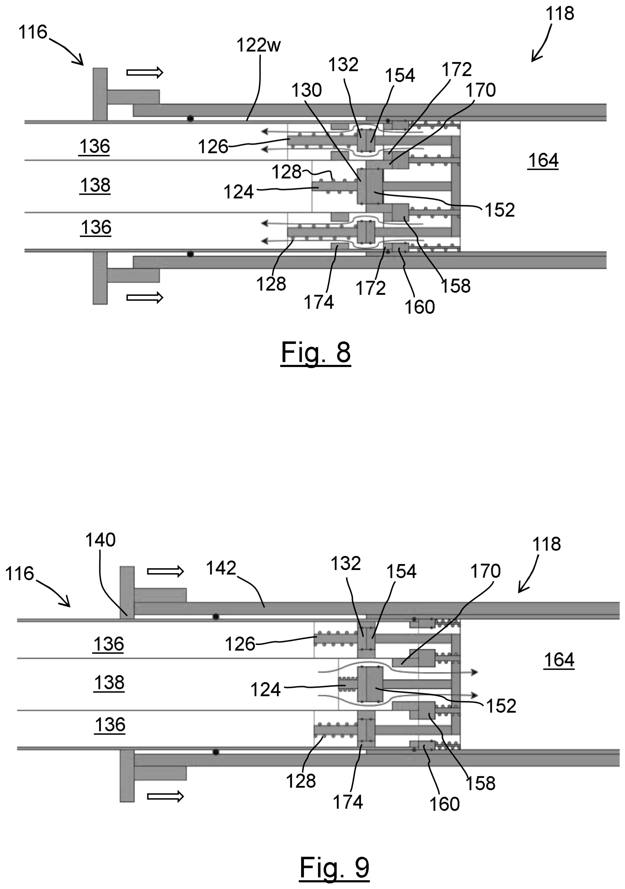

Figure 8 shows an intermediate position (an example of a first fluid flow configuration) in which the male coupling 116 has been partially inserted into the female coupling 118 by means of movement of the male refuel coupling 116 further into the female coupling 118 of the aircraft fuel port. As a result of such movement, the inner and outer valve pushers 152, 154 push the inner valve 124 and outer valve 126 against the force of the springs 128. The spring portion of the inner sprung ring 158 is compressed in the axial direction as a result of the movement of the abutting surface of the annular seats 170, 172. The spring portion of the outer sprung ring 160 is compressed in the axial direction as a result of the movement of the abutting surface of the annular seat 172 and the cylindrical wall 122w. In this position, the inner valve pusher 152 of the female coupling 116 forms a seal with the surrounding seat 170 of the male coupling 118. The outer annular valve face 132 is lifted out (pushed out) from its annular seat 172 by the outer valve pusher 154 which moves through and out of both (a) the annular passage between the inner sprung ring 158 and the outer sprung ring 160 and (b) the passage defined by the annular seat 172. Thus, in the first fluid flow configuration shown in Figure 8, the inner spring-loaded valve 124 is still effectively closed and the outer spring-loaded valve 126 is open. Thus, fluid communication is permitted between the outer space 136 of the male coupling 116 and the interior space 164 of the female coupling 118, yet sealing off the interior space 138 of the male coupling 116.

Figure 9 shows a fully inserted position (an example of a second fluid flow configuration) in which the male coupling 116 is fully inserted into the female coupling 118 so that the free end of the outer wall 142 of the female coupling 118 abuts against the interior of the locating ring 140 of the male coupling 116. As a result of such movement, the inner and outer valve pushers 152, 154 push the inner valve 124 and outer valve 126 further in the axial direction against the force of the springs 128. The spring portions of the inner sprung ring 158 and of the outer sprung ring 160 are further compressed in the axial direction as a result of such further movement of the male coupling 116. In this position, the inner valve pusher 152 of the female coupling 118 exits the seat 170 of the male coupling 116 thus effectively opening the inner valve 124. The outer annular valve face 132 of the male coupling 116 and the associated outer valve pusher 154 of the female coupling 118 both move into sealing engagement with the annular passage defined by the further annular seat 174. Thus, in the second fluid flow configuration shown in Figure 9, the inner spring-loaded valve 124 is open and the outer spring-loaded valve 126 is closed. Thus, fluid communication is permitted between the interior space 138 of the male coupling 116 and the interior space 164 of the female coupling 118, yet sealing off the outer space 136 of the male coupling 116.

It will be appreciated that the male coupling 116 may be considered as a first connector and that the female coupling 118 may be considered as a second connector and that together when the male coupling 116 is coupled to the female coupling 118 they may together be considered as connector assembly. In use such a connector assembly can thus adopt any one of three separate states: (i) the first configuration (shown in Figure 8), in which the valve(s) associated with the inner pipe section (interior space 138) is/are closed (preventing flow of fluid between the interior space 138 of the male coupling 116 and the interior space 164 of the female coupling 118) and the valve(s) associated with the outer annular pipe section (outer space 136) of the male coupling 116 is/are open (permitting flow of fluid between the outer space 136 of the male coupling 116 and the interior space 164 of the female coupling 118); (ii) the second configuration (shown in Figure 9), in which the valve(s) associated with the inner pipe section (interior space 138) is/are open (permitting flow of fluid between the interior space 138 of the male coupling 116 and the interior space 164 of the female coupling 118) and the valve(s) associated with the outer annular pipe section (outer space 136) of the male coupling 116 is/are closed (preventing flow of fluid between the outer space 136 of the male coupling 116 and the interior space 164 of the female coupling 118); and (iii) a third configuration (shown in Figures 6 and 7), at the start of contact between the male coupling 116 and the female coupling 118, in which all such valve(s) are still closed (both (a) preventing flow of fluid between the interior space 138 of the male coupling 116 and the interior space 164 of the female coupling 118 and (b) preventing flow of fluid between the outer space 136 of the male coupling 116 and the interior space 164 of the female coupling 118). In other words, there is (i) a first configuration (inner closed/outer open) (ii) a second configuration (inner open/outer closed) and (iii) a third configuration (inner closed/outer closed). In the present embodiment there is no configuration in which all such valves are open and, as such, no state in which there is permitted both (a) fluid communication between the interior space 138 of the male coupling 116 and the interior space 164 of the female coupling 118 and (b) fluid communication between the outer space 136 of the male coupling 116 and the interior space 164 of the female coupling 118.

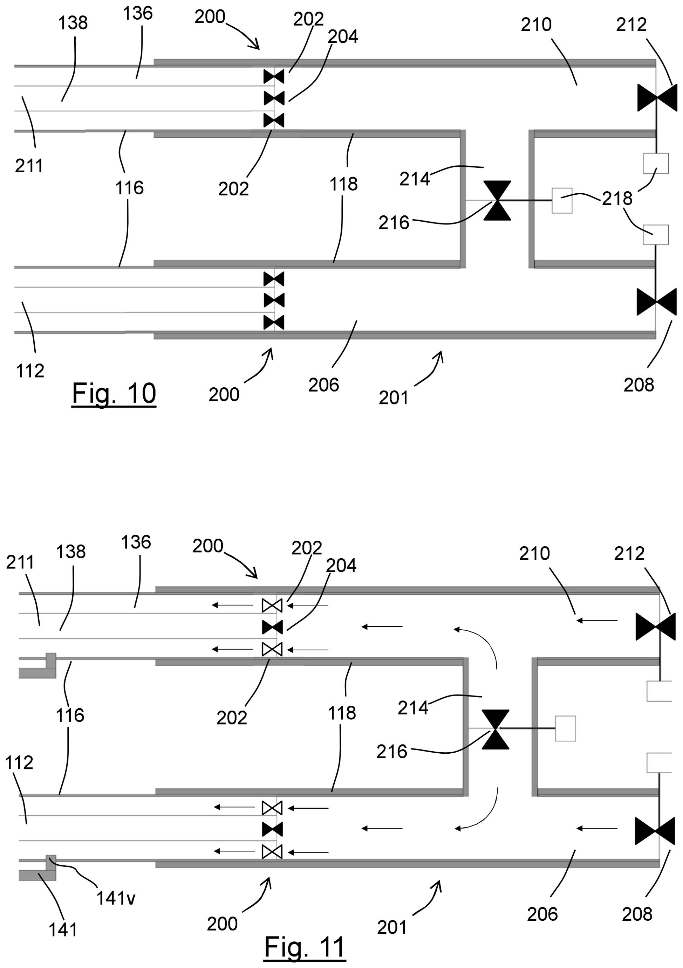

Refuelling of an aircraft with liquid hydrogen using a connector assembly formed by the male coupling 116 attached to the ground-side fuel line and the female coupling 118 attached to the aircraft 100 will now be described, with reference to Figures 10 to 15. Figures 10 to 15 shows two connection assemblies 200, each being formed by a male coupling and a female coupling as shown in Figures 2 to 9. The valve arrangements of the connection assemblies 200 is shown schematically in Figures 10 to 15 by valve symbols, two symbols 202 to represent the valve arrangement that closes / opens the outer space 136 and a single symbol 204 to represent the valve arrangement that closes / opens the inner space 138. The two connection assemblies 200 are shown attached to a two-port aircraft refuel arrangement 201 resembling an H-shape. The two-port aircraft refuel arrangement 201 comprises an aircraft-side fill line 206 and associated fill valve 208 that connects to pipework in the aircraft for filling liquid hydrogen tanks from a ground-side fuel supply line 112. The arrangement 201 also comprises a aircraft-side return line 210 and associated return valve 212, for return of gas / fluid from the aircraft hydrogen tanks to an externally provided (i.e. ground-side) return conduit 211. The arrangement 201 also comprises a bypass line 214 and associated bypass valve 216 that provides a flow path (on the aircraft side) directly between the fill line 206 and the return line 210. All such valves (valves 208, 212, 216) of the arrangement 201 are actuated electronically via electric actuators 218 (although these could be hydraulically controlled actuators or electro-hydraulic actuators).

As shown in Figure 10, the male couplings 116 are brought into contact (the position as shown in Figures 6 and 7) with the female couplings 118. At this stage, all valves 202, 204, 208, 212, 216 are closed. Then the male couplings 116 are pushed further into the female couplings 118 so as to adopt the first fluid flow configuration (the position as shown in Figure 8), in which the outer space valve 202 is open and the inner space valve 204 is closed. All three valves 208, 212, 216 of the two-port aircraft refuel arrangement 201 remain closed. It will be appreciated that at this stage the bypass valve 216 could alternatively be open.

At this stage, a vacuum may already exist in the outer space 136. Any gas in the refuel arrangement 201 between (a) the valves 202, 204 of the connection assemblies 200 and (b) the fill valve 208 and the return valve 212 is removed with the use of the vacuum pump via pipe 141 and valve 141v (as shown in Figure 11). Thus the outer space 136 may be used effectively to transfer a vacuum from the outer space 136 (on the ground side) to the interior region within the refuel arrangement 201 (on the aircraft side) - or in other words to use a lower pressure area in the outer space 136 to cause any gas (e.g. contaminants) inside the refuel arrangement 201 to be sucked out. This creates a near-vacuum in the refuel arrangement 201 to create an oxygen-scarce environment, making the area suitable for subsequent delivery of hydrogen.

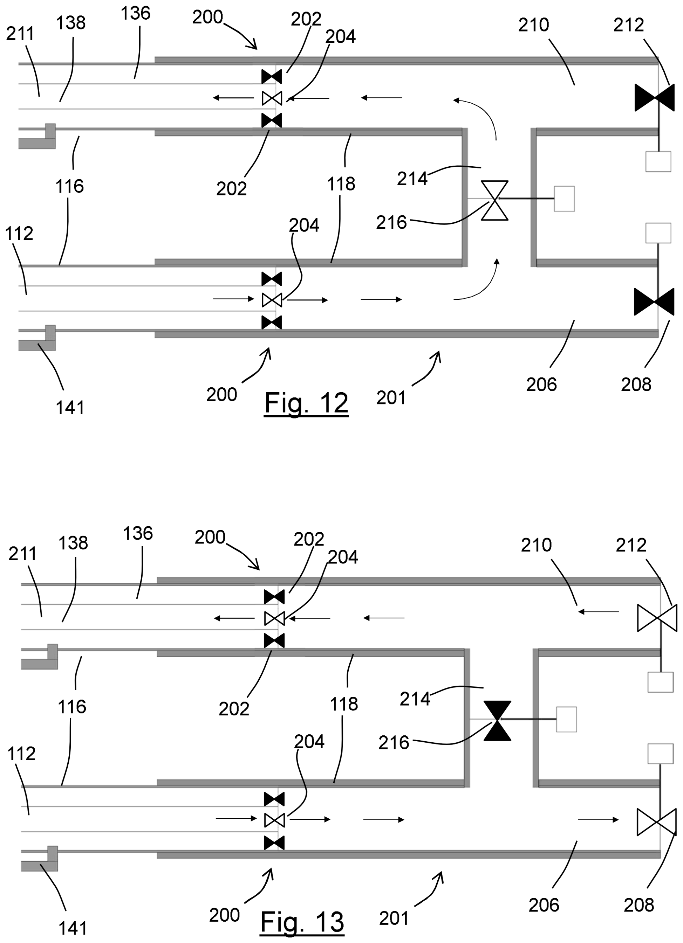

Then, to move from the state shown in Figure 11 to the state shown in Figure 12, the male couplings 116 are pushed yet further into the female couplings 118 so as to adopt the second fluid flow configuration (the position as shown in Figure 9), in which the outer space valve 202 is closed and the inner space valve 204 is open. The bypass valve 216 of the two-port aircraft refuel arrangement 201 is opened (the fill and return valves 208, 212 remaining closed) and liquid hydrogen is supplied from the ground-side fill line 112 via the open valve 204 on the connection assembly 200 on the aircraft side fill line 206. The hydrogen flows via the bypass valve 216 and then out via the return line 210 to the ground-side return conduit 211, at least initially as hydrogen gas that vaporises as a result of heat transfer from the pipework. This step serves to chill down the aircraft-side refuel arrangement 201 and the ground-side fuel lines. Such returned hydrogen may be captured and returned to its liquid state or vented or safely disposed of in some other way. At this stage, the vacuum in the outer space 136 serves to provide thermal insulation between the hydrogen in the inner space 138 and the environment immediately surrounding the refuelling equipment.

Once chill-down of the pipe work has been completed, the refuelling may commence, which is shown in Figure 13. The position of the male couplings 116 relative to the female couplings 118 remains unchanged. The bypass valve 216 of the two-port aircraft refuel arrangement 201 is closed and the fill and return valves 208, 212 are opened. Thus, liquid hydrogen is then supplied from the ground-side fill line 112 (using the inner region 138 of the pipe) via the open valve 204 on the connection assembly 200 on the aircraft-side fill line 206 and via the refill valve 208 to the aircraft fuel tanks. Any liquid hydrogen that turns to gaseous hydrogen is collected via the return line 210 (the associated return valve 212 being open) to the externally provided return conduit 211. As in the step described above, such returned hydrogen may be captured (and condensed back to liquid) and returned or otherwise disposed of.

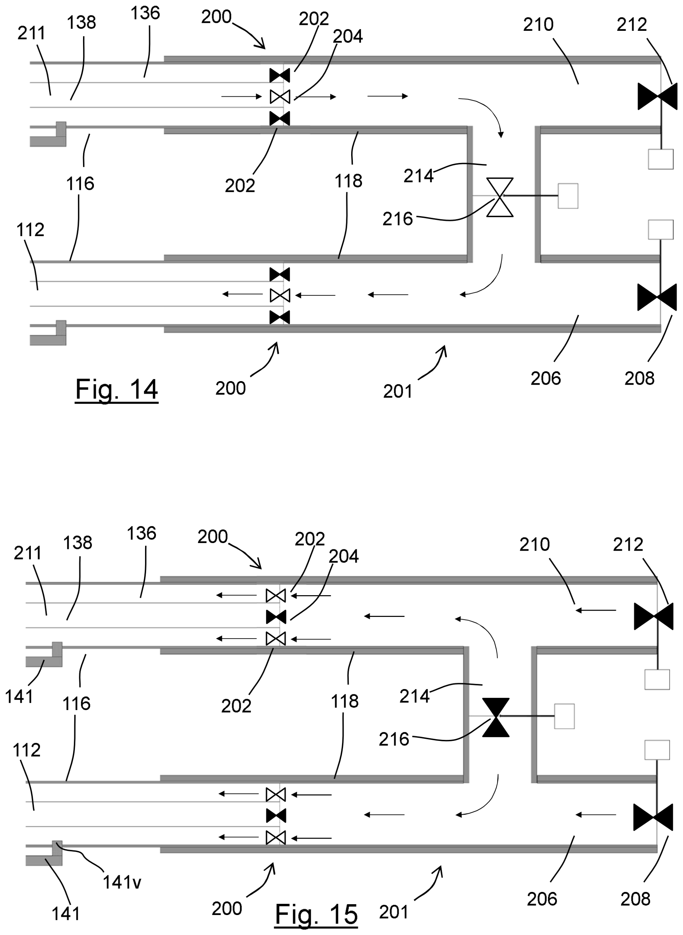

When the desired amount of liquid hydrogen has been supplied, the flow of liquid hydrogen is stopped, the bypass valve 216 is opened and the fill and return valves 208, 212 are closed (with the position of the male couplings 116 relative to the female couplings 118 remaining unchanged - so that the outer space valve 202 remains closed and the inner space valve 204 remains open). With reference to Figure 14, a reverse line flush with gaseous hydrogen can then be carried out (although it may be considered that this step is optional and/or could be replaced with a different step to remove any liquid hydrogen in the refuel arrangement 201 and/or to warm-up, if so required, the refuel arrangement 201),. Thereafter, the male couplings 116 are partially retracted / pulled out from the female couplings 118 so as to adopt again the first fluid flow configuration (the position as shown in Figure 8), in which the outer space valve 202 is open and the inner space valve 204 is closed. The bypass valve 216 is (optionally) closed, and the other valves 208, 212 of the refuel arrangement 201 remain closed. Then, as shown in Figure 15, a vacuum drawn with one or more vacuum pump(s), via pipes 141, may be used to draw a vacuum in the aircraft refuel arrangement 201 by drawing out hydrogen gas via the outer space 136. This vacuum once formed ensures that no hydrogen remains in the refuel arrangement 201 for safety reasons.

As a final step the male couplings 116 are removed from the female couplings 118 by retracting them further, which has the result of causing both the outer space valve 202 and the inner space valve 204 to be closed (back to the configuration as shown in Figure 10) ready for final disconnection, with all valves 202, 204, 208, 212, 216 being closed.

It will be appreciated that the female couplings 118 of the two-port aircraft refuel arrangement 201 are fixed in position relative to each other and relative to the aircraft. While not shown in the Figures, the movement of the two male couplings 116 towards or away from the female couplings 118 may be similarly fixed relative to each other. For example the two male couplings 116 may be part of a single integrated refuel line comprising both a fill line and a return line. The movement of the male coupling 116 between the first configuration and the second configuration, and to and from the third configuration, may be effected by rotating a handle associated with the connection assembly that converts that rotating movement into axial movement of the male coupling 116 towards / or away from the female coupling 118. A camming arrangement may be provided which allows for positioning of, and optionally locking of, the male coupling 116 relative to the female coupling 118 when in the first configuration (inner closed/outer open). Such a camming arrangement could be used as an alternative, or as an addition to, the locating ring 140 of the male coupling 116 when securing the male coupling 116 in its second configuration (inner open/outer closed). Such a camming arrangement could for example comprise one or more pins on one of the male 116 and female couplings 118 being arranged to locate on or in one or more camming surfaces / channels of the other of the male 116 and female couplings 118, with relative axial movement of the couplings 116, 118 along their common axis being driven by relative rotation about that axis of the pin(s) relative to the camming surface(s). Additionally or alternatively other mechanical means (locating nubs for example) could be used to assist with positioning the male coupling 116 relative to the female coupling 118 particularly when needing to attain a position intermediate between first contact between the male coupling 116 and the female coupling 118 and full insertion of the male coupling 116 into the female coupling 118.

This above-described embodiment thus provides a hydrogen refuelling system for an aircraft which uses the outer flow path of a double walled pipe to connect to the internal onboard (i.e. aircraft-side) refuel pipework of the aircraft and use it to create a path to enable a vacuum on the aircraft refuel bypass line. Such a vacuum in the aircraft refuel pipework is used instead of using an inert gas, which has the advantage of not requiring the use of nitrogen during a standard refuelling process, which in turn reduces complexity and also refuelling times as compared to a similar solution that uses nitrogen as an inerting gas. Hydrogen removed with the use of a vacuum pump can be captured and reused (in contrast with any solution that purges with an inert gas, such as Nitrogen). The outer flow path is also configured to be sealed off when containing a vacuum so that it can provide thermal insulation to the inner flow path when the inner flow path is used to convey cryogenic hydrogen. The outer flow path is also able to be used for the conveying of gases to or from the aircraft. Thus in contrast to standard double walled vacuum insulated pipes in which the outer layer is only used for providing a vacuum layer that provides thermal insulation, in the present embodiment that outer layer is used for other purposes too. Using only hydrogen or a vacuum to purge, inert and / or chill-down the pipework and associated hydrogen storage infrastructure on the aircraft may allow the aircraft-side pipework and tanks etc to be kept colder than would otherwise be the case for example if gaseous nitrogen were used in the process.

Such an embodiment may also provide compatibility with standard "type 4" single-walled pipes on the aircraft side. Furthermore, when the couplings are disconnected, the valves remain shut resulting in a refuel hose that resembles a "type 1" pipe (being a double-walled vacuum-jacketed type pipe). Any leakage into the vacuum insulation through the valves can be compensated for by a vacuum pump (e.g. a pump connected via pipe 141 shown in the Figures and/or a pump located on the refuel truck or ground refuelling station).

The use of a vacuum pump external of the aircraft to provide a vacuum (including a partial vacuum) in the bypass line on the aircraft has a weight advantage over solutions that might otherwise utilise on-aircraft vacuum pumps, given that such vacuum pumps can weigh anywhere from 10kgs to over 100kgs.

Other embodiments relate to a refuelling connector having an inner pipe section for conveying cryogenic hydrogen to an aircraft and an outer pipe section for holding a vacuum to provide thermal insulation to the inner section. In such other embodiments, the connector can, when connected to the aircraft and with the use of one or more valves of the connector, create a vacuum on the aircraft-side or otherwise convey fluid from / to the aircraft, via the outer pipe section.

Whilst the present invention has been described and illustrated with reference to particular embodiments, it will be appreciated by those of ordinary skill in the art that the invention lends itself to many different variations not specifically illustrated herein. By way of example only, certain possible variations will now be described.

The inner and outer valves of the connection assembly of the illustrated embodiment are configured such that they are actuated in dependence on the axial position of the male coupling relative to the female coupling and so that it is not possible to open both inner and outer flow paths at the same time. Those valves could be electrically actuated or otherwise actuated independently of the position of the male coupling relative to the female coupling and/or could be configured to allow the inner and outer flow paths to both be open at the same time.

The male coupling could be provided on the aircraft and the female coupling on the ground side. Alternatively the couplings need not have one part that inserts into the other (no discernible male / female couplings).

Figures 10 to 15 show a refuelling process using a connection assembly in accordance with the above-described embodiment. The same connection assembly may be used in a defuelling process, in which cryogenic hydrogen fuel is removed from the aircraft.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

The term 'or' shall be interpreted as 'and/or' unless the context requires otherwise.

## Claims

1. A method of refuelling or defuelling an aircraft comprising the following steps
connecting a pipe to the aircraft via a refuel port of the aircraft, the pipe comprising an inner channel and an outer channel, the outer channel surrounding the inner channel,
using the outer channel to remove gas from the aircraft, and
conveying hydrogen to, or from, the aircraft via the inner channel whilst providing thermal insulation for the inner channel by means of a vacuum in the outer channel.

2. The method of claim 1, wherein the step of using the outer channel to remove gas from the aircraft includes transferring a vacuum to the aircraft.

3. The method of claim 1 or claim 2, wherein the step of conveying hydrogen via the inner channel comprises conveying liquid hydrogen.

4. The method of any preceding claim, wherein the method comprises a step of conveying gaseous hydrogen to, or from, the aircraft via the inner channel.

5. The method of any preceding claim, wherein
the method comprises connecting a further pipe to the aircraft, and
the method is performed such that liquid hydrogen is conveyed to, or from, the aircraft via one of (a) the pipe comprising the inner channel and the outer channel and (b) the further pipe, and such that the other of (a) the pipe comprising the inner channel and the outer channel and (b) the further pipe is used as a gaseous return line, and wherein
the method optionally further comprises opening a valve to create a bypass pathway between (a) the pipe comprising the inner channel and the outer channel and (b) the further pipe.

6. The method of any preceding claim, wherein
the inner channel has a first valve arrangement and the outer channel has a second valve arrangement,
during the step using the outer channel to remove gas from the aircraft the first valve arrangement is closed and the second valve arrangement is open, and
during the step conveying hydrogen to, or from, the aircraft via the inner channel, the first valve arrangement is open and the second valve arrangement is closed.

7. The method of claim 6, wherein the first valve arrangement and the second valve arrangement are together so configured that only one of the first valve arrangement and the second valve arrangement can be open at a time.

8. The method of any preceding claim, wherein the pipe connected to the aircraft has at a free end a first coupling and the refuel port of the aircraft has a second coupling and the step of connecting the pipe to the aircraft includes connecting the first coupling to the second coupling.

9. The method of claim 8, when dependent on claim 6 or 7, wherein at least one of the first valve arrangement and the second valve arrangement is partly provided as part of the first coupling and partly provided as part of the second coupling.

10. The method of claim 8 or 9, wherein the closing and opening of at least one of the first valve arrangement and the second valve arrangement is dictated by the position of the first coupling relative to the second coupling.

11. An aircraft refuelling connector comprising an inner pipe section for conveying liquid hydrogen and an outer pipe section for holding a vacuum in a space between the inner pipe section and the outer pipe section,
the inner pipe section having a first valve arrangement,
the outer pipe section having a second valve arrangement,
the aircraft refuelling connector having a first configuration whilst connected to an aircraft, for creating a vacuum within a region, separate from and in fluid communication with, the space between the inner pipe section and the outer pipe section, in which first configuration the first valve arrangement is closed and the second valve arrangement is open, and
the aircraft refuelling connector having a second configuration whilst connected to an aircraft, for conveying liquid hydrogen to or from the aircraft via the connector, in which second configuration the first valve arrangement is open and the second valve arrangement is closed.

12. A coupling for use in the method of any claims 8 to 10, wherein the coupling is one of the first coupling and the second coupling.

13. An aircraft comprising a refuel port configured for use in the method of any claims 1 to 10.

14. A refuelling or defuelling system for conveying liquid hydrogen to, or from, an aircraft, the system comprising a pipe comprising an inner channel and an outer channel, the outer channel surrounding the inner channel, the pipe being configured for connecting to the aircraft via a refuel port of the aircraft in accordance with the method of any of claims 1 to 10.

15. A double walled pipe having an inner conduit surrounded by an outer conduit, wherein
the inner conduit is configured for conveying cryogenic hydrogen to an aircraft as part of an aircraft refuelling process,
the outer conduit is both
configured to hold a vacuum, while the inner conduit is conveying cryogenic hydrogen, so that the inner conduit is vacuum insulated, and
configured to transfer a vacuum to the aircraft as part of the aircraft refuelling process.
